# EUROPEAN PATENT APPLICATION

(11) **EP 3 888 451 A1**
(43) Date of publication of application: **06.10.2021**
(21) Application number: 20167747.3
(22) Date of filing: 02.04.2020
(51) Int. Cl.: A01G 22/00

(54) **METHODS FOR PRODUCING CANNABIS PLANTS AND METHOD FOR OBTAINING A SUBSTANCE FROM CANNABIS PLANTS**

(71) Applicant: Tellement Facile SA, 1266 Duillier (CH)
(72) Inventor: Marakhov, Kostiantyn, 1266 Duillier (CH)
(74) Representative: Bird & Bird LLP

(57) **Abstract**

Method for producing Cannabis plants, comprising the steps of sowing seeds of the Cannabis plant and harvesting the Cannabis plants from a field before their maturity.

## Description

The present invention relates to a method for producing, as opposed to breeding, Cannabis plants and to a method for obtaining a desired substance from Cannabis plants. The invention can be used advantageously with various other plants.

### Background of the Invention

The cultivation of a Cannabis usually begins with sowing seeds which germinate within 1 week (=> seedling). If the seedlings still having few small leaves have been grown in a cold frame, flowerbed, greenhouse, pot or the like (preproduction), the seedlings can be transplanted into a field for further growth. The seedling stage lasts for about 2 weeks after which a more robust Cannabis plant with its characteristic leaves is available (finished preproduction). The Cannabis plant, particularly its stem, gains height (growth) during about 8 weeks (vegetation). Depending on changed lighting conditions, i.e. less hours of daylight, buds form and flowering begins. The development of the flowers requires 6 to 12 weeks, and if pollinated, pistils of female Cannabis plants will begin to develop into seeds.

A cultivator interested in a high CBD and other cannabinoids content considers the flowers of Cannabis Sativa to be ready for harvesting (mature) after 10 weeks and those of Cannabis Indica after about 8 weeks of flowering, following vegetation. The production period for Cannabis containing a least concentration of cannabinoids sums up to at least 19 weeks (1 week for germinating + 2 weeks seedling stage + 8 weeks of vegetation + 8 weeks of flowering).

A farmer who is interested rather in gaining fibres does not have to wait for the flowers to fully develop since the fibres are gained from the plant's stem. If he sows in the seeds by the middle of April (main crop), he may harvest the hemp plants from the end of July on, when the plants are in bloom (https://www.oekolandbau.de/landwirtschaft/pflanze/ spezieller-pflanzenbau/oelfruechte/oekologischer-hanfanbau/). The respective production period is 15 weeks.

Alternatively, he can begin production in the second half of July, the hemp being a catch crop, leave the plants in the field during winter and harvest them in March of the following year.

DE 10 2014 016 754 explains that the plant reaches its adult state at the end of October, that is after about 15 weeks. The adult plants are left in the field during winter, which results in soft hemp fibres suitable for spinning to a textile thread.

If the farmer is interested in gaining hemp oil from the plants, he can sow in seeds until the beginning of May, when the soil has more than 8°C, and harvest only the plant top sections including the seeds from the beginning of September on (https://www.oekolandbau.de/landwirtschaft/pflanze/spezieller-pflanzenbau/oelfruechte/ oekologischer-hanfanbau/). The production period is 19 weeks. According to the article the rest of the plants can be harvested after flailing the seeds. Apparently, the article leaves open when exactly the rest of the plants is harvested.

WO 2012/098167 A2 explains to harvest leafy blossom tops i.e. the uppermost 1/5^{th} to 1/4^{th} of Cannabis plants after 6-8 weeks in a "partial harvesting" procedure, while the stems are left in the field to grow on and produce smaller new leafy blossom tops and longer stems. Thus, production of the Cannabis plants continues after "partial harvesting".

In summary, usual production periods last for at least 15 weeks and usual production periods end when farmers generally consider the Cannabis plant to be ready for harvesting.

### Problem & Solution

The respective efficiency of some methods involving the production of Cannabis plants is considered to be too small.

It is an object to provide a method involving the production of Cannabis plants offering improved efficiency.

This object is achieved by the methods according to the independent claims. Preferred embodiments form the respective subject matter of the dependent claims.

The method according to a first aspect is suitable for producing Cannabis plants. The method includes the steps:
- S1: sowing seeds of the Cannabis plant,
- S2: harvesting the Cannabis plants from a field before their maturity, particularly before the end of the usual production period.

The method according to a second aspect is suitable for obtaining a desired substance from Cannabis plants. The method includes the steps:
- S1: sowing seeds of the Cannabis plant,
- S2: harvesting the Cannabis plants from a field before their maturity, particularly before the end of the usual production period,
- S3: extracting the desired substance from the harvested Cannabis plants.

Step S₂ essentially requires to harvest the Cannabis plants before the end of their usual production period, that is before farmers consider the Cannabis plants as mature, in general. Within the concept of the present invention "harvesting" is to be understood as cutting the stem such that the majority, preferably at least 2/3, of the stem including the plant's leaves is separated from the root.

When step S₂ is performed, the Cannabis plants are not yet suitable for crossing sexually. In any case, the methods do not involve sexually crossing of the plants before step S₂. The methods do not involve to subsequently select certain Cannabis plants from the harvested Cannabis plants. Instead, all harvested Cannabis plants can be processed to extract the desired substance. Steps S₁, S₂ rather belong to the field of agriculture.

It has been found that the concentration or content *C* of at least one desired substance extractable from the harvested Cannabis plants is sufficient for further use or processing when harvesting the plants even before the end of the usual production period, that is prematurely. This desired substance can be a trace element, an ester, a bittern, a carboxylic acid, a fatty acid, an oil or an essential oil. Thus, the methods according to the present invention may render producing the plants more efficient in a shorter time period while maintaining an acceptable yield of the desired substance.

Further, when harvesting the Cannabis plants before their maturity (S₂), the flowers are still quite small. The concentration of Cannabidiolic acid (CBDA) and cannabinoids in the harvested plants can be less than in Cannabis plants harvested further towards the end of the usual production period. An extract produced from the harvested Cannabis plants can comprise a smaller concentration of CBDA and less cannabinoids, if any. This may be desirable for a product, particularly a food product or beverage, including the extract. This may also help to meet legal requirements for food products.

By harvesting the Cannabis plants prematurely, the field is available earlier for subsequent cultivation or production, e.g. a catch crop to remain in the field until the following spring. Further, nutrients in the soil may be saved for subsequent plant production. The farmer can harvest and sell the Cannabis plants after having occupied his field during a time period which is shorter than the usual production period.

The present invention aims to improve the efficiency of larger scale production of Cannabis plants in a field, the cultivation of which plants is permitted by the authorities. The methods are not concerned with producing Cannabis plants having an illegal concentration of THC. In fact, the method might not even be suitable to produce Cannabis plants having a least concentration THC as the claimed production period is too short.

The "production period" begins with step S₁ and ends with step S₂. Within the concept of the present invention, the "usual production period" of Cannabis is at least 15 weeks and ends when farmers generally consider the Cannabis plants to be ready for harvesting.

Within the concept of the present invention the expressions "mature" and "maturity" are to be understood to indicate the state of the Cannabis plants at the end of the usual production period, that is when the plants are generally or usually harvested by a farmer. If a seedling of the Cannabis plant is first produced in a cold frame, flower bed, green house or the like (preproduction) and the obtained seedling is transplanted into a field, then the usual production period includes the time interval for preproduction, within the concept of the present invention.

Within the concept of the present invention the Cannabis plants are photoperiod Cannabis plants which begin flowering depending on the fraction of hours of daylight per 24 hours. The invention is not concerned with autoflowering Cannabis plants which begin flowering after a "programmed" period of cultivation or production.

### Preferred embodiments

Preferred embodiments explained in the following can be combined with each other, advantageously, unless stated otherwise.

Step S₁ of an embodiment includes sowing seeds of the Cannabis plant in a first container, particularly in a cold frame, a flower bed, a green house or the like. The embodiment further comprises step
- S4: transplanting Cannabis seedlings obtained by step S1 from the first container into the field, before step S2.

This embodiment may offer the advantage of achieving a higher yield.

In an embodiment, step S₂ is performed only after 6 or 7 weeks since step S₁. This may help to harvest a least mass of Cannabis plants per hectare.

Step S₂ of another embodiment includes separating the majority, preferably at least 2/3, of the stem including the plant's leaves from the root. The remainder of the plant can be ploughed in, particularly to prepare the field for a subsequent crop.

In an embodiment, step S₂ is performed on September 22 or on equinox or before the end of September at the latest. Step S₁ can performed 6 to 10 weeks prior to step S₂, preferably 8 weeks before step S₂. By doing so, the harvested cannabis plants have very small or no flowers and the concentration of Cannabidiolic acid (CBDA) and other cannabinoids in the harvested plants can be smaller. Further, an interval between harvesting a main crop and planting a winter grain can be used advantageously for producing Cannabis.

A further embodiment comprises
- S6: freezing the harvested Cannabis plant to a temperature (T2) below -10°C, preferably to below -40°C, preferably after step S2, preferably within 2 hours after step S2.

A shock freezing apparatus can be used for step S6. Step S6 can be performed prior to step S₃. This may help to preserve the quality of a substance contained in the harvested plants. This step can also help to reduce the moisture of the harvested Cannabis plants. Further, this embodiment provides the user with more flexibility with respect to the point in time of step S₃. Also freezing serves to crack some of the cells of the harvested plants. This may help to extract a higher percentage of the desired substance(s) from the frozen plants, during step S₃.

According to another embodiment one of steps S₁ and S₄ includes arranging the seeds or seedlings in at least two rows in the field, wherein two adjacent rows of these are spaced apart by 0.1 to 0.5 metres. This may serve to improve the yield.

In an embodiment one of steps S₁ and S₄ is performed during one of months June, July and August. Step S₁ or S₄ can be performed within two weeks after harvesting a main crop or a corn, particularly different from Cannabis. Step S₁ can performed 6, 8 or 10 weeks before equinox or before the end of September at the latest. An interval between harvesting a main crop and planting a winter grain can be used advantageously for producing Cannabis. This may help to improve the overall yield per hectare per year.

Step S₂ of a further embodiment is performed within 2/3 of the time interval required for maturity of the plants. Step S2 can be performed within 10 weeks, preferably within 8 weeks, from step S₁. This may help to have the field available earlier for a subsequent crop.

Step S₂ of another embodiment includes separating top sections of the harvested Cannabis plants, the top sections including leaves. The top sections including leaves can each have a length of 10 to 50 cm. This may help to reduce the effort for extracting the desired substance from the top sections including leaves, subsequently.

According to another embodiment the plant is a member of the Cannabis Sativa or Cannabis Indica family.

In a further embodiment the plant is a Cannabis plant or variety permitted for cultivation on account of its low THC content.

The production period between steps S₁ and S₂ of an embodiment excludes the months of December, January and February. The invention aims to have the field available for a subsequent crop, i.e. a winter grain, or a catch crop.

In an embodiment the desired substance of step S₃ is a trace element, an ester, a bittern, a carboxylic acid, a fatty acid, an oil or an essential oil.

Step S₃ of an embodiment includes preparing a solution of the harvested plants and a solvent which can be drinking water or ethanol. After some time in the solvent the harvested plants can be removed from the solution. After this step, the solution includes the desired substance. If drinking water is used as the solvent, it can have a temperature between 40 and 97°C, preferably above 90°C. Step S6 can be performed before step S₃ such that the harvested plants are frozen at the beginning of step S₃. The harvested plants can be ground (step S₇) before step S₃, particularly after step S6. Step S₇ can help to increase the surface area of the harvested plants per mass unit.

A further embodiment comprises
- S5: planting another plant in the same field after step S2, preferably within 2 weeks from the end of step S2 or before October.

This may help to improve the overall yield per hectare per year.

A preferred product can be obtained by one of the above methods or embodiments. The product, which can be a food product or beverage, can include the desired substance obtained by step S₃. Because of step S₂ the product may include a rather small concentration of CBDA, smaller than can be achieved when harvesting the Cannabis plants further towards the end of the usual production period.

### Exemplary embodiments

Further details and advantages of the invention become apparent to the skilled person from the following exemplary embodiments.

As an example, seeds of *Cannabis Sativa* were sown (S₁). After 2 months the resulting plants were harvested (S₂), thus well before the end of the usual production period of at least 15 weeks or 3.5 months as mentioned in DE 10 2014 016 754 A1. At this point in time the flowers were still quite small. Top sections including leaves of the harvested Cannabis plants were separated from the stem sections.

The top sections of the harvested plants were ground (S₇). A defined volume of drinking water having a temperature of about 90°C was added and a substance was extracted from the plants (S₃). After about 50 minutes the solution was cooled to about 20°C. The ground plants were removed from the solution using a sieve. A solution having the desired substance (specimen A) was obtained.

The same was done with Cannabis Sativa harvested after 15 weeks of production, in contrast to step S₂, resulting in specimen B.

Specimen A and specimen B were analysed by high pressure liquid chromatography (HPLC) using an Agilent 1260 HPLC system and a Nucleoshell RP 2.7 µm C8, 150 * 4.6 mm column from Macherey Nagel.

The concentration of e.g. CBDA in specimen A was smaller than in specimen B.

## Claims

1. Method for producing Cannabis plants, comprising the following steps:
S1 sowing seeds of the Cannabis plant,
S2 harvesting the Cannabis plants from a field before their maturity.

2. Method for obtaining a desired substance from Cannabis plants, comprising the following steps:
S1 sowing seeds of the Cannabis plant,
S2 harvesting the Cannabis plants from a field before their maturity,
S3 extracting the desired substance from the harvested Cannabis plants.

3. Method according to one of the preceding claims, wherein step S₁ includes sowing seeds of the Cannabis plant in a first container, particularly in a cold frame, a flower bed, a green house or the like, the method further comprising the step
S4 transplanting Cannabis seedlings obtained by step S1 from the first container into the field, before step S2.

4. Method according to one of the preceding claims, wherein step S₂ includes separating the majority, preferably at least 2/3, of the stems of the Cannabis plants including leaves from the roots.

5. Method according to one of the preceding claims, further comprising
S6 freezing the harvested Cannabis plant to a temperature (T2) below -10°C, preferably to below -40°C, preferably after step S2, preferably within 2 hours after step S2.

6. Method according to one of the preceding claims, wherein one of steps S₁ and S₄ includes arranging the seeds or seedlings in at least two rows in the field, wherein two adjacent rows of these are spaced apart by 0.1 to 0.5 metres.

7. Method according to one of the preceding claims, wherein one of steps S₁ and S₄ is performed during one of months June, July and August.

8. Method according to one of the preceding claims, wherein step S₂ is performed within 2/3 of the time interval required for maturity of the plants.

9. Method according to one of the preceding claims, wherein step S₂ is performed within 10 weeks, preferably within 8 weeks, from step S₁.

10. Method according to one of the preceding claims, wherein step S₂ includes separating top sections of the harvested Cannabis plants, the top sections including leaves, preferably wherein the top sections including leaves each have a length of 10 to 50 cm.

11. Method according to one of the preceding claims, wherein the plant is a member of the Cannabis Sativa or Cannabis Indica family.

12. Method according to one of the preceding claims, wherein the plant is a Cannabis plant permitted for cultivation on account of its low THC content.

13. Method according to one of the preceding claims, wherein the production period between steps S1 and S2 excludes the months of December, January and February.

14. Method according to one of the preceding claims, wherein the desired substance is a trace element, an ester, a bittern, a carboxylic acid, a fatty acid, an oil or an essential oil.

15. Method according to one of the preceding claims, further comprising
S5 planting another plant in the same field after step S2, preferably within 2 weeks from the end of step S2 or before October.

16. Product obtained by a method according to one of the preceding claims, preferably including the desired substance of step S₃.
